# FASCICULE DE BREVET EUROPEEN

(11) **EP 1 085 461 B1**
(45) Date de publication et mention de la délivrance du brevet: **28.12.2005**
(21) Numéro de dépôt: 00402475.8
(22) Date de dépôt: 08.09.2000
(51) Int. Cl.: G06T 3/00

(54) **Procédé de manipulation de structures de données arborescentes pour la navigation spatiale**
Verfahren zur Handhabung von Baumdatenstrukturen für die räumliche Navigation
Technics of tree data representation for spatial navigation

(30) Priorité: 17.09.1999 FR 9911720
(43) Date de publication de la demande: 21.03.2001
(73) Titulaire: Perdrizet, Franck Jean Frédéric, 34080 Montpellier (FR)
(72) Inventeur: Perdrizet, Franck Jean Frédéric, 34080 Montpellier (FR)

(56) Documents cités:
- EP-A- 0 436 263
- GAHEGAN M N: "An efficient use of quadtrees in a geographical information system" INTERNATIONAL JOURNAL OF GEOGRAPHICAL INFORMATION SYSTEMS, JULY-SEPT. 1989, UK, vol. 3, no. 3, pages 201-214, XP000905034 ISSN: 0269-3798
- RIPPLE W J ET AL: "Quadtree data structures for geographic information systems" CANADIAN JOURNAL OF REMOTE SENSING, DEC. 1989, CANADA, vol. 15, no. 3, pages 172-176, XP000904717 ISSN: 0703-8992
- SAMET H., WEBBER R. E.: "USING QUADTREES TO REPRESENT POLYGONAL MAPS" PROCEEDINGS OF COMPUTER VISION AND PATTERN RECOGNITION '83, juin 1983 (1983-06), pages 127-132, XP000907060 WASHINGTON D. C.
- GARGANTINI I. ET AL: 'ADAPTIVE DISPLAY OF LINEAR OCTREES', COMPUTERS AND GRAPHICS, HEADINGTON HILL HALL, OXFORD, GB, vol.13, no. 3, 1989, pages 337- 343 XP000142336

## Description

La présente invention consiste en un procédé de navigation spatiale à indexation topologique ternaire. Par indexation spatiale, on entend un système de repérage efficace d' une portion d' un espace fini. L'indexation spatiale selon l'invention porte sur des représentations iconographiques (c'est à dire, des plans, des cartes, des photographies, des images, quels que soient leurs types et leurs contenus) traditionnellement planes, tout en étant transposable aux moyens modernes de visualisation en trois dimensions.

Un mode habituel d'indexation spatiale s' effectue à l'aide d' un système de coordonnées appliqué à un quadrillage qui est superposé à une représentation graphique. Ainsi, par exemple, on situe un édifice répertorié sur un plan de ville à l'aide d' une paire de coordonnées ( à l'instar de celles utilisées pour les mots-croisés ) caractérisant la maille du quadrillage dans laquelle il se trouve. Cependant, la plupart du temps, l'objet recherché ne se trouve pas au centre du carreau ainsi désigné, où porte prioritairement le regard, mais plus ou moins en bordure, voire à cheval entre plusieurs carreaux ; de plus, selon son emprise, les carreaux s' avèrent soit trop grands, soit trop petits pour permettre un repérage efficace.

L'invention s'applique à des représentations matricielles (« raster »), c' est à dire sous forme d' ensembles de points, ou de pixels, non nécessairement interprétables en vecteurs, tels qu' en produisent les scanners et les enregistrements photographiques, par exemple. Elle porte sur un découpage régulier de la représentation en mailles imbriquées et fixes, de telle sorte qu' une zone d'intérêt, même aux contours flous, puisse toujours apparaître dans son intégralité, et en position approximativement centrale du cadre d' observation, selon un nombre limité d' emprises prédéfinies correspondant à des niveaux de visualisation.
Le processus de cadrage d' un secteur quelconque s' obtient à l'aide d' un procédé de visualisation de la représentation iconographique indexée de façon originale, tandis que le procédé de navigation selon l'invention, permet de passer d'un secteur à un autre ( qui peut le contenir en tout ou partie ) selon un même ou différents niveau(x) de visualisation.

Les différentes étapes de la description de l'invention sont illustrées à l'aide d' un ensemble de dessins et d' algorithmes dont les commentaires, apparaissant au fil du texte, sont résumés dans les légendes ci-après

Pour traiter ce problème, il existe différentes méthodes qui portent sur des objets bien déterminés, soit par cadrage au plus près de leurs contours, en gérant chaque objet comme un cas particulier, soit par indexation à résolution variable et partition paire de l'espace en utilisant la modélisation par « quadtrees » (SAMET H., WEBBER R. E. : « Using quadtrees to represent polygonal maps », Proceedings of Computer Vision and Pattem Recognition, 1983-06, pages 127-132, XP000907060, Washington D. C.).
Les « quadtrees » servent à décrire et à retrouver efficacement des objets, au sein d'une représentation spatiale plane, à l'aide d'un système de mailles à taille variable qui en suivent les contours, par sélection des seules parties porteuses d'information utiles à leur reconstitution. Ceci s'effectue automatiquement par découpage récursif du plan en 4 quadrants de plus en plus petits, jusqu'à obtention des quadrants satisfaisant à un critère de rendu graphique.
Dans un espace à 3 dimensions, les « quadtrees » deviennent des « octrees » et le processus porte sur des octants qui peuvent se diviser récursivement en 8 cubes plus petits.
Les « quadtrees », qui ont été créés pour servir de mécanisme de cribles en cascade, n'étaient pas destinés à hiérarchiser des représentations spatiales selon des mailles emboîtées que l'on consulte à travers une logique de navigation documentaire, comme dans le « système de génération automatique de cartes géographiques » (DELORME D., EP 0 436 263, 1991). On peut notamment vérifier que les fonctions de navigation ne sont pas optimisées dans une telle structure: au centre d'une vue quelconque se trouve la croisée des 4 quadrants qui la composent, et la transition d'un niveau à un autre induit un décalage en privilégiant une des 4 zones, nord-ouest, nord-est, sud-ouest, sud-est, là où conviendrait, en général, un zoom centré, impossible à réaliser directement entre niveaux voisins.
La même remarque se transpose dans un espace à 3 dimensions, puisqu'il n'existe pas de cube central dans un « octree ».
Les « quadtrees » fonctionnent selon une logique binaire, car, d'une part, c'est celle selon laquelle un quadrant contient ou non de l'information, ce qui sert de test à la division récursive, d'autre part, c'est celle du codage informatique classique : bit à valeur 0 ou 1, et ses multiples, octal, hexadécimal, etc...Par exemple, l'octal qui repose sur un codage pair à 2³= 8 valeurs de 0 à 7 peut être utilisé pour numéroter les 8 cubes d'un « octree » (GARGANTINI I. et al., « adaptative display of linear octrees », Computers & Graphics, Headington Hill Hall, Oxford, GB, vol. 13, n°3, 1989, pages 337-343, XP000142336).
Or, l'expérience permet de constater qu'un utilisateur repère rapidement ce qu'il recherche au sein d'une photographie, même s'il s'agit d'une zone sans contours précis, pourvu qu'il sache que çà se trouve en position approximativement centrale de l'écran. Ceci permet de s'affranchir de tout artifice de mise en évidence, tel que cercle ou périmètre de cadrage, ou bien changement de couleurs pour les seuls objets bien définis au prix d'une lourde structuration vectorielle.

Pour privilégier la notion d'observation centrale et intégrale, il convient de dépasser la logique binaire, notamment celle des « quadtrees » , et de procéder à une partition impaire de l'espace.
**Figure 1** : mise en évidence, dans la représentation graphique plane (1), d' une maille (2) de chacun des 3 premiers niveaux
**Figure 2 :** abscisses, ordonnées et numéros d'index ternaires (3) des 9 mailles de niveau 1
**Figure 3 :** numéros d'index ternaires des 9 mailles de niveau 2 contenues dans la maille centrale de niveau 1 ; construction graphique liant numéro d'index et coordonnées complètes de la maille 0210
**Figure 4** (en perspective) : abscisses croissant de gauche à droite, ordonnées en oblique à partir du bas, hauteurs de bas en haut, et mise en évidence de la maille parallélépipédique de numéro d'index 021 parmi les 27 mailles parallélépipédiques de niveau 1
**Figure 5** : mise en évidence d' une « vue » (4) de niveau 2 (centrée sur une maille de niveau 2)
**Figure 6** : exemple de translation latérale (recentrage) donnant une « vue » centrée sur un objet qui était en position périphérique sur la « vue » initiale
**Figure 7** : exemple de translation diagonale (recentrage) donnant une « vue » centrée sur un objet qui était en position périphérique sur la « vue » initiale
**Figure 8** : « vue » 011211 de niveau 3 apparaissant dans le cadre d' affichage (5)
**Figure 9 :** « vue » 011211 entourée d' une première couronne pour l'affichage de 25 mailles, et d' une seconde pour l'affichage de 49 mailles
**Figure 10 :** « vue » tridimensionnelle composée de 27 mailles parallélépipédiques
**Figure 11** : exemples de recentrages latéral et diagonal où l'« outil » de recentrage est figuré par un pavé de 8 touches directionnelles (6) avec « outil » de réglage de pas (O) sur position 1
**Figure 12** : exemples de translations latérale et diagonale d'une quantité égale à 2 mailles ; (O) sur 2
**Figure 13** : exemples de translations latérale et diagonale d'une quantité égale à 3 mailles ; (O) sur 3
**Figure 14** : exemple de transition (centrée) entre niveaux où l'« outil » de transition est figuré par un bouton de zoom + et un bouton de zoom - (7)
**Figure 15 :** exemple regroupant les « outils » de translation (ici, cas d' un recentrage) et de transition (ici, cas du zoom +) permettant la navigation selon l'invention, tandis que le passage de la « vue » initiale (8) à la « vue » finale (9) s' observe à travers le cadre d' affichage
**Figure 16** : représentation partielle du maillage sous forme d'arborescence
**Figure 17** : algorithme de numérotation automatique des fichiers-mailles
**Figure 18** : algorithme d' accès à un fichier-maille M dans l'arborescence
**Figure 19** : algorithme de constitution d' une « vue » ( et de ses couronnes ) centrée sur la maille M
**Figure 20** : algorithme de translation de t mailles depuis une maille M
**Figure 21** : pavé numérique d' un clavier d' ordinateur servant de touches directionnelles
**Figure 22** : algorithme de zoom + centré sur une maille M
**Figure 23** : algorithme de zoom - depuis une maille M

Etant donnée une représentation iconographique plane, on y inscrit la plus grande emprise rectangulaire possible ou souhaitée, que l'on structure en mailles élémentaires imbriquées. Cette emprise initiale est divisée en 9 rectangles identiques, ou mailles, qui lui sont semblables et la remplissent totalement ( trois selon un côté, trois selon l'autre ).
On a ainsi constitué un premier niveau de mailles.
Chacune de ces mailles de niveau 1 est ensuite subdivisée, selon la même logique, en 9 mailles plus petites, ce qui donne 81 mailles de niveau 2.
A leur tour, les mailles de niveau 2 sont subdivisées selon la même logique, pour donner un maillage de niveau 3.
Et ainsi de suite jusqu'à atteindre le niveau de maillage le plus dense que l'on s' est fixé.

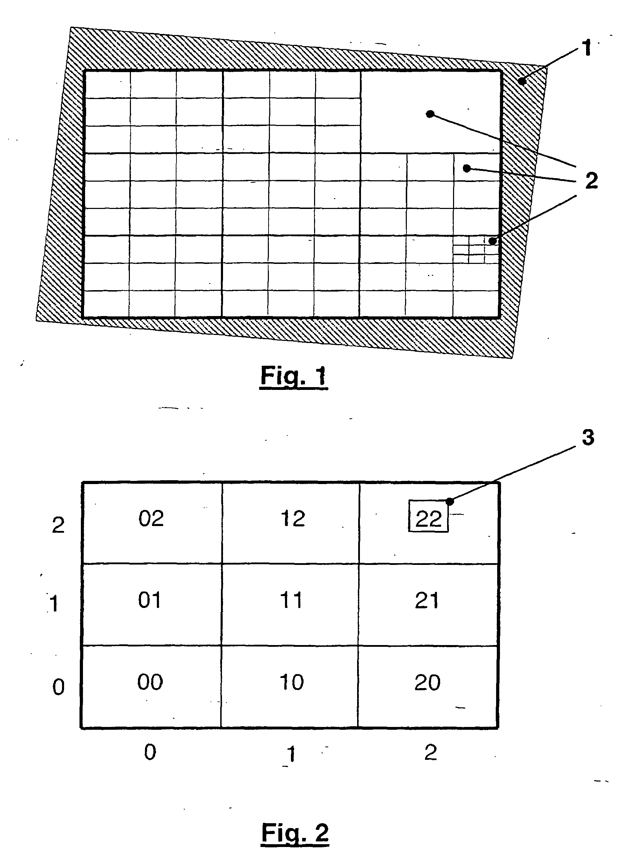

*Sur la **fig. 1**, mise en évidence, dans la représentation graphique plane (1), d' une maille (2) de chacun des 3 premiers niveaux.*
De niveau en niveau, les longueurs des côtés des mailles varient selon des rapports de 3, d' où le qualificatif de ternaire pour la logique d'imbrication qui régit ce maillage, encore justifié ci-après par le recours à l'arithmétique ternaire.

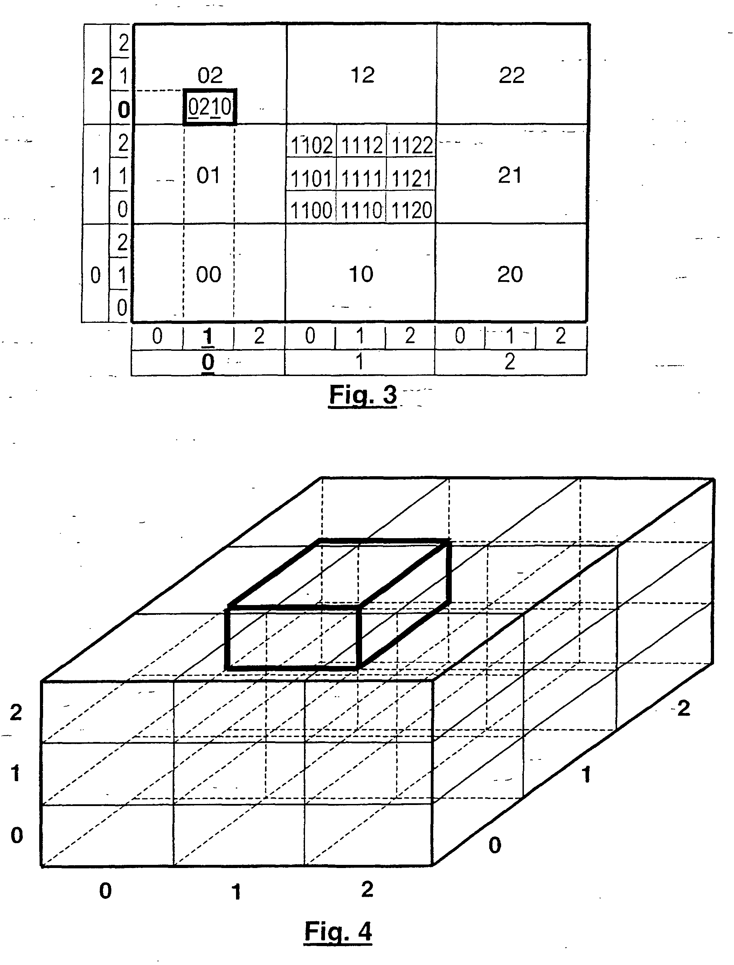

La représentation étant ainsi structurée en niveaux de mailles agencés selon cette logique ternaire, chaque maille est désignée de manière univoque au moyen de l'indexation selon l'invention.
Les mailles de niveau 1 sont repérées, depuis un quelconque de leurs coins, par abscisse (selon un côté) et ordonnée (selon l'autre) à l'aide des 3 valeurs de l'arithmétique ternaire (ou à base 3) : 0, 1, 2. On construit alors l'index selon l'invention obtenu par juxtaposition de l'abscisse et de l'ordonnée d' une maille ( on convient de noter l'abscisse en tête suivie de l'ordonnée, mais on pourrait tout aussi bien choisir l'ordre de juxtaposition inverse ), ce qui donne les 9 nombres ternaires suivants : 00, 01, *02, 10, 11, 12, 20, 21, 22. Cf. exemple de la **fig. 2** avec mise en évidence d'un numéro d'index (3 ) bâti selon l'hypothèse d' une origine au coin en bas à gauche, des abscisses croissant vers la droite, et des ordonnées croissant vers le haut.*
Ce principe de numérotation est ensuite réitéré pour chaque maille de niveau 2, les 9 nombres élémentaires précédents étant augmentés, par juxtaposition à gauche, du numéro d'index de la maille de niveau 1 qui la contient ( on pourrait aussi convenir d'une juxtaposition à droite ).
Par exemple, les 9 mailles de niveau 2 contenues dans la maille centrale de niveau 1 (numéro d' index = 11) ont pour numéros d'index: 1100, 1101, 1102,1110, 1111, 1112, 1120, 1121,1122 *cf. **fig. 3*** On applique ensuite la même logique de numérotation à chaque maille de niveau 3, dont le numéro d'index comporte 6 chiffres ternaires, les 2 premiers se rapportant à la maille de niveau 1, et les 2 suivants à la maille de niveau 2 qui la contiennent.
Et ainsi de suite, jusqu'à numéroter le niveau de maillage le plus dense que l'on s' est fixé.

La méthode de construction du numéro d'index qui vient d'être présentée, se ramène en fait, à l' entrelacement de coordonnées (abscisse et ordonnée) ternaires, désignées par le qualificatif de complètes dans l'ensemble du texte relatif à la présente invention, et qui traduisent le long de leurs axes respectifs le processus récursif de numérotation ternaire.
Les coordonnées ternaires complètes d' une maille dans une représentation plane correspondent au nombre ternaire obtenu par juxtaposition de tous les chiffres dont le rang de position dans le numéro d'index est impair pour l'une, et respectivement pair pour l'autre.
*Sur la **fig. 3** est présenté l'exemple d'une construction graphique liant le numéro d'index d'une maille de niveau 2 (**0**2**1**0) à son abscisse complète (le nombre ternaire 01) et à son ordonnée complète (le nombre ternaire 20), avec la convention de noter l'abscisse en tête suivie de l'ordonnée.*

L'index selon l'invention, ternaire par construction, possède les propriétés remarquables suivantes :
- à toute valeur de l'index correspond une et une seule maille, et réciproquement ; il joue le rôle de coordonnée unique nécessaire et suffisant à identifier une maille.
- les numéros d' index de mailles d' un même niveau se déduisent les uns des autres par de simples additions ou soustractions en base 3 ( ce qui sera précisé plus loin )
- la longueur de l'index caractérise le niveau de maillage sur lequel il porte ; ce dernier est égal à la moitié du nombre de chiffres constitutifs de l'index (dans le cas d' une représentation plane). ( ces deux dernières propriétés relatives aux notions de voisinage et d' inclusion expliquent le qualificatif de topologique donné à cet index ).
Remarque : l'indexation ternaire présentée peut connaître des variantes de construction ou des transcriptions se ramenant au même principe qui relève de la présente invention.

Cette structure de maillage à indexation ternaire, présentée pour une représentation iconographique plane, peut être généralisée à une représentation tridimensionnelle, une maille étant alors un parallélépipède composé de 3x3x3 = 27 mailles parallélépipédiques semblables.
Le repérage d' une maille parallélépipédique nécessite une troisième coordonnée ternaire, la hauteur, rapportée à un repère orthogonal ( dont les directions sont parallèles à celles des arêtes du schéma parallélépipédique d' ensemble ).
Dans ce cas, la maille de niveau 1 qui a pour première coordonnée ternaire 0, 2 pour deuxième, et 1 pour troisième, porte le numéro d' index 021 *cf. **fig. 4** en perspective où l'abscisse augmente de gauche à droite, l'ordonnée en oblique à partir du bas, et la hauteur de bas en haut.*
Et la maille de niveau 3 qui a pour première coordonnée ternaire 201, 112 pour deuxième et 010 pour troisième porte le numéro d'index 210011120.

L' observation de la représentation iconographique se fait à travers un cadre, dit d' affichage, dans lequel apparaît un certain nombre de mailles d' un niveau donné.

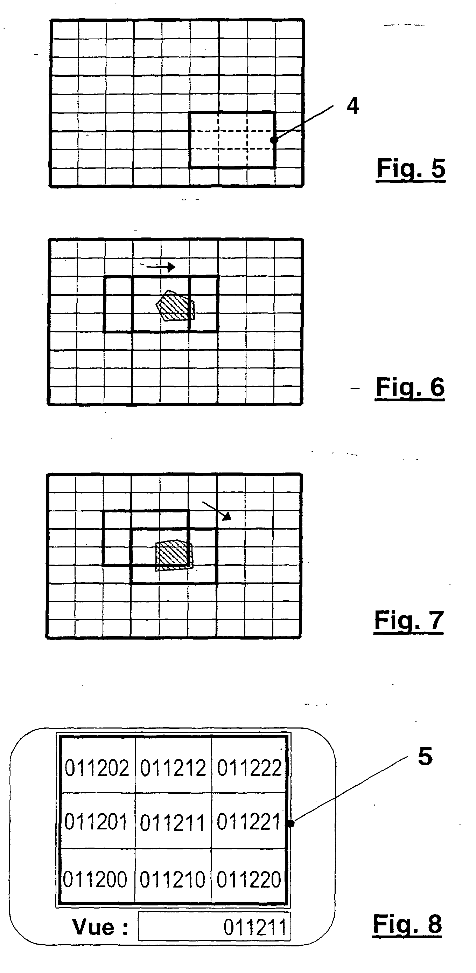

On convient qu' une «vue» encadre exactement 9 mailles d' un niveau donné ( trois selon un côté, trois selon l'autre) et qu' elle porte le numéro d'index de la maille centrale ( on pourrait tout aussi bien la caractériser par le numéro d'index d' une des 8 autres mailles ) ; on dira, sans écarter d' autres désignations possibles, qu' une « vue » est de même niveau que sa maille centrale. *Cf. **fig. 5** avec mise en évidence d'une «vue» (4) de niveau 2 (centrée sur une maille de niveau 2)*

Une telle «vue» présente les propriétés remarquables suivantes :
- elle est de forme semblable à une maille, et donc suit le schéma rectangulaire d'ensemble.
- elle permet de parcourir entièrement la représentation iconographique selon un nombre limité de niveaux de visualisation.
- tout secteur observé ( dans sa quasi totalité ) en position périphérique d'une «vue» de niveau n, peut toujours se retrouver en position centrale sur une «vue» chevauchante de même niveau, qui s' obtient grâce à un déplacement d'une quantité égale à une maille entière de niveau n, selon l'un des 8 sens principaux de translation du schéma rectangulaire retenu : 2 selon un côté , 2 selon l' autre, et 4 selon les diagonales ( les bords du plan d' ensemble faisant exception à la règle) . *Cf. exemples de niveau 2 sur **fig. 6 et** 7*
Remarque : les objets de dimensions comparables ou supérieures à celles d' une «vue» de niveau 2 peuvent être visualisés selon toute l'emprise de la représentation iconographique qui correspond à une «vue» de niveau 1.

Lorsque les « vues » apparaissent toujours selon la même emprise dans le cadre d' affichage, on obtient, de niveau en niveau, des effets d' agrandissement ou de réduction dans un rapport de 3 exactement ( ou zooms de rapport de 3 ou 1/3), tandis qu' au sein d' un même niveau, se produisent des effets de recadrage à échelle constante.

Le champ d' observation de la représentation iconographique se limite normalement à une « vue» *cf. **fig. 8** où la « vue » 011211 apparaît dans le cadre d'affichage (5)*
Cependant il peut être étendu logiquement à partir de celle-ci en l'entourant, par exemple, d' une couronne de 16 mailles de même niveau qu' elle, ce qui donne un rectangle composé de 5x5 mailles suivant toujours le schéma rectangulaire d'ensemble.

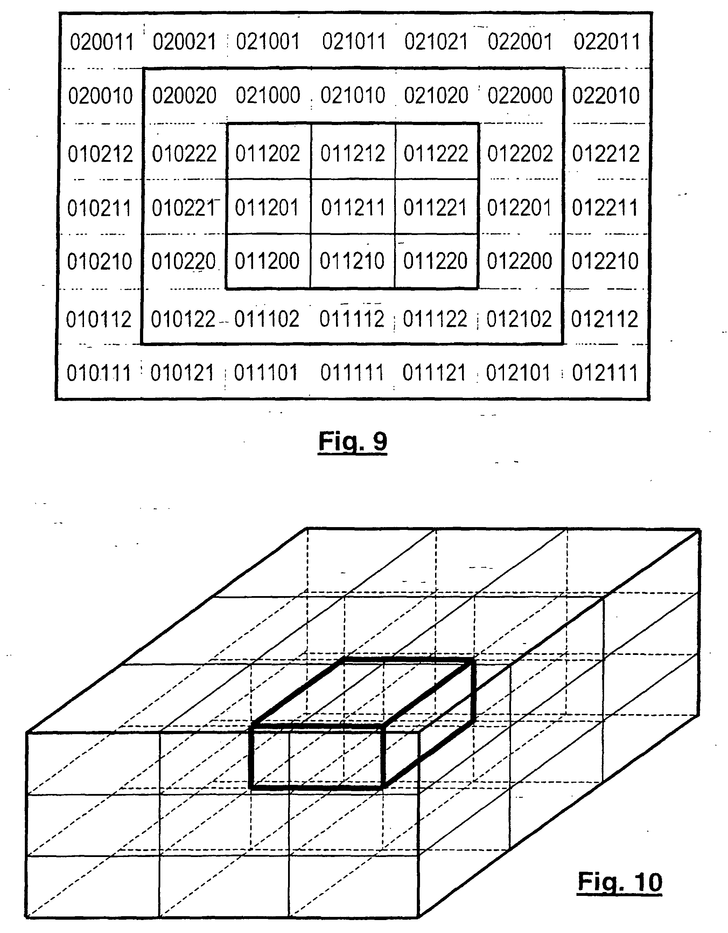

Cette première couronne peut à son tour être entourée d'une deuxième couronne de 24 mailles de même niveau, ce qui donne encore un rectangle suivant le schéma rectangulaire d'ensemble et composé de 7x7 mailles
*Cf. **fig. 9** où la «vue » 011211 est entourée d'une première couronne pour l'affichage de 25 mailles, et d'une seconde pour l'affichage de 49 mailles*
Une couronne supplémentaire conduirait à 9x9 mailles.

L' échelle d' affichage désirée s' obtient classiquement en jouant sur le rapport entre les dimensions du cadre d' observation et celles de l'emprise de la «vue»; suivant le cas, cette dernière peut déborder du cadre, et donc n' être visible qu' en partie, ou au contraire, s'inscrire largement dans le cadre.
On peut notamment prévoir une échelle donnée par niveau de visualisation, ce qui permet d' échapper à la contrainte des multiples ou sous- multiples de 3.

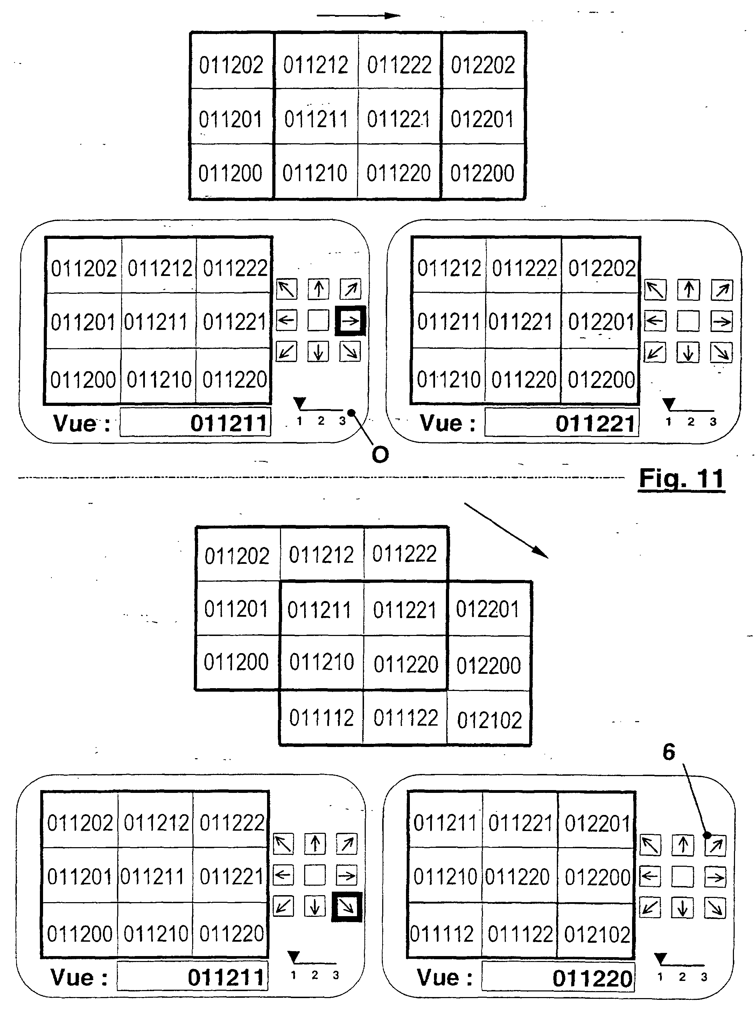

Le procédé de visualisation qui vient d' être présenté pour une représentation iconographique plane peut être étendu à une représentation tridimensionnelle, une «vue» étant alors un parallélépipède composé de 3x3x3 = 27 mailles parallélépipédiques semblables, soit 26 entourant la maille centrale dont elle porte le même numéro d'index. *Cf. **fig. 10***

Le « mécanisme » de passage d' un secteur à un autre ( qui peut le contenir en tout ou partie) selon un même ou différents niveau(x) de visualisation, repose sur la structuration de la représentation iconographique en mailles dont les agencements variables, sous forme de «vues », en réponse à l' action des « outils » de navigation, produisent des effets de déplacement au sein d' un continuum.

A l'aide du procédé de navigation et de visualisation, on peut effectuer 2 types de déplacements : des translations entre «vues» au sein d'un même niveau, et des transitions entre «vues » de niveaux différents (ou zooms).
Elles font passer automatiquement d' une «vue» initiale à celle unique qui résulte de l'action effectuée en exploitant les propriétés de l'arithmétique en base 3, notamment celle de la retenue qui s'applique au delà de 2 dans une opération entre nombres ternaires.

Le recentrage d' une « vue » selon un côté se traduit par un décalage d'un rang de l'ensemble de ses mailles, et donc par l'intégration d' un rang de 3 nouvelles mailles selon un bord de la «vue», venant compenser la disparition de 3 autres sur le bord opposé. Pour un recentrage selon une diagonale, le changement se traduit par l'intégration de 5 nouvelles mailles formant un coin, venant compenser la disparition de 5 autres mailles du coin diagonalement opposé.

Le recentrage d' une « vue » repose sur le calcul automatique des numéros d' index des mailles constitutives de la «vue» résultant de l'action de recentrage, en exploitant, selon un seul niveau, les propriétés de l'indexation spatiale selon l'invention.
Il peut s' opérer efficacement en 2 temps : d' abord, calcul direct du numéro d' index de la nouvelle maille centrale ( qui est, par convention aussi celui de la nouvelle «vue» ), puis calcul des numéros d ' index des 8 mailles qui l'entourent pour former la «vue» résultante.
Le système de recentrage selon l'invention présente la propriété remarquable suivante :
Les 8 sens de recentrage correspondent à des variations de plus ou moins une unité en abscisse ou (et) en ordonnée qui se répercutent sur l'abscisse et l'ordonnée ternaires complètes d' une maille, pour donner celles de sa voisine située dans le sens du recentrage, et, après entrelacement, le numéro d'index de la maille résultant de l'action

Par exemple le numéro d'index de la maille située « en bas à droite » (c'est à dire, en diagonale, dans les sens croissant des abscisses et décroissant des ordonnées) de la maille de numéro d'index égal à 011211 se calcule tout simplement en ajoutant 1 à son abscisse «complète », et en retranchant 1 à son ordonnée complète, les calculs se faisant en base 3 :
Abscisse complète de la maille initiale : 011 ; 011+1=012 abscisse complète de la maille finale Ordonnée complète de la maille initiale :121 ; 121-1=120 ordonnée complète de la maille finale Le numéro d'index de la maille résultant du recentrage est donc : 011220
*Cf. exemples de recentrages latéral et diagonal sur la **fig. 11**, où l'« outil » de recentrage est figuré par un pavé de 8 touches directionnelles (6), tandis que le passage de la « vue » initiale à la « vue » finale s'observe à travers le cadre d'affichage.*

Le recentrage est, en fait, un cas particulier de translation d' une maille (selon les côtés ou les diagonales du schéma rectangulaire d' ensemble). Il se généralise à toute translation d'un nombre entier de mailles suivant les directions principales du schéma rectangulaire d' ensemble, ainsi :
Peut s' effectuer, dans les limites de la représentation plane, toute translation d' un nombre entier t de mailles selon côtés ou diagonales, les variations en abscisse ou (et) en ordonnée ternaires complètes équivalant à t transcrit en base 3.

Ceci peut se concrétiser par un outil de réglage du pas de translation (O) dont les degrés correspondent à différentes valeurs du nombre t de maille(s) de translation.
Il est intéressant de retenir pour t les valeurs 1, 2 et 3. Un tel outil, qui peut dans ce cas être constitué d' un curseur à 3 positions, présente notamment l'intérêt d' offrir 3 « vitesses » différentes de déplacement selon un niveau (*voir notamment **fig. 11, 12** et **13***).

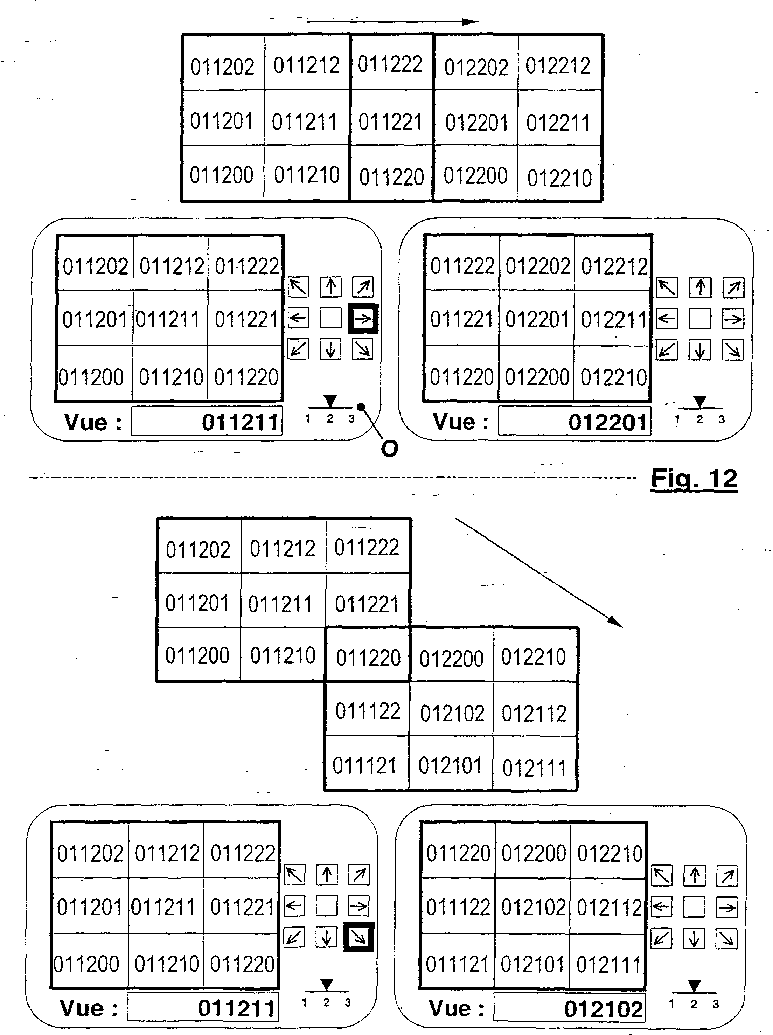

La «vue» résultant d' une translation de 2 mailles présente la particularité d' avoir un rang de maille (éventuellement réduit à une seule maille en cas de translation diagonale) en commun avec la «vue» initiale ; la translation correspond alors à des variations de plus ou moins 2 en abscisse ou en ordonnée sur la maille centrale de la «vue» initiale. «Vues» initiale et finale se chevauchent du tiers exactement lors d'une translation latérale de 2 mailles
Par exemple, une telle translation depuis la maille de numéro d'index 011211 dans le sens « en bas à droite » de la maille de numéro d'index donne :
011 + 2 = 020 ( en base 3 ) abscisse complète de la maille finale
121 - 2 = 112 ( en base 3 ) ordonnée complète de la maille finale
Le numéro d'index de la maille résultant de cette translation est donc : 012102
*Cf. exemples de translations latérale et diagonale de 2 mailles sur la **fig. 12** ; outil (O) sur position 2.*

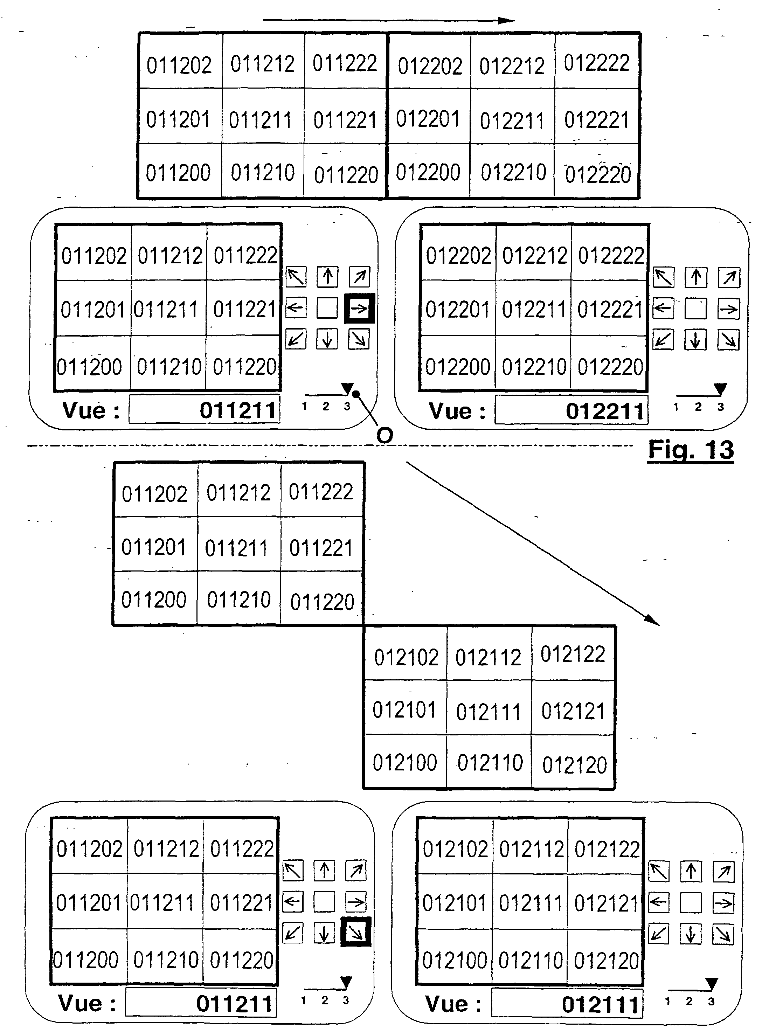

La «vue» résultant d' une translation de 3 mailles présente la particularité d' avoir un côté mitoyen (éventuellement réduit à un point si translation diagonale ) avec la «vue» initiale ; la translation est alors traduite par des variations de plus ou moins 10 (valeur ternaire correspondant à 3 en base 10) en abscisse ou en ordonnée sur la maille centrale de la «vue» initiale.
Par exemple, une telle translation depuis la maille de numéro d'index 011211 dans le sens « en bas à droite » de la maille de numéro d'index donne :
011 + 10 = 021 ( en base 3 ) abscisse complète de la maille finale
121 - 10 = 111 ( en base 3 ) ordonnée complète de la maille finale
Le numéro d'index de la maille résultant de cette translation est donc : 012111
*Cf. exemples de translations latérale et diagonale de 3 mailles sur la **fig. 13** ; outil (O) sur position 3.*

L' action qui a pour effet de substituer à une «vue» de niveau i celle coïncidant avec l'une des 9 mailles de même niveau qu' elle encadre, en venant occuper exactement son emprise de visualisation, correspond à un effet de zoom grandissant dans un rapport de 3 exactement, tandis que l'effet inverse est réalisé en substituant à la « vue » initiale, celle de niveau i - 1 centrée sur la maille de niveau i -1 qui contient son centre.
Ainsi cette fonction de zoom logique permet de passer d'un niveau de visualisation à un autre qui lui est supérieur ou inférieur, quel que soit le nombre de niveaux de visualisation retenu.

D' autre part, on a vu que l'index se constitue par ajouts successifs en suffixe ( on pourrait aussi convenir en préfixe ) des 2 chiffres ternaires caractérisant la position d' une des 9 mailles à l'intérieur de la maille de niveau supérieur.

Les effets de zoom s' obtiennent tout simplement par ajout ( zoom grandissant, dit zoom + ) ou suppression ( zoom réduisant, dit zoom - ) de chiffres ternaires, par tranches de 2 ( ou 3, en cas de représentation tridimensionnelle), en suffixe (ou en préfixe) aux numéros d'index. Ils sont de rapports multiples de 3 ou 1/3 si la nouvelle « vue » s' affiche selon l'emprise exacte de la «vue» antérieure.

Ainsi, par exemple, la « vue » 110211 correspond à un zoom + d' un rapport de 3 centré sur la maille 1102, tandis que la « vue » 11 résulte de l'effet inverse ( zoom - de rapport 1/3 ), avec une emprise d' affichage constante. Zoom et recentrage peuvent se combiner ( ce que refléterait dans cet exemple le choix d' un zoom+ à partir de la maille 1200 au lieu de 1102).

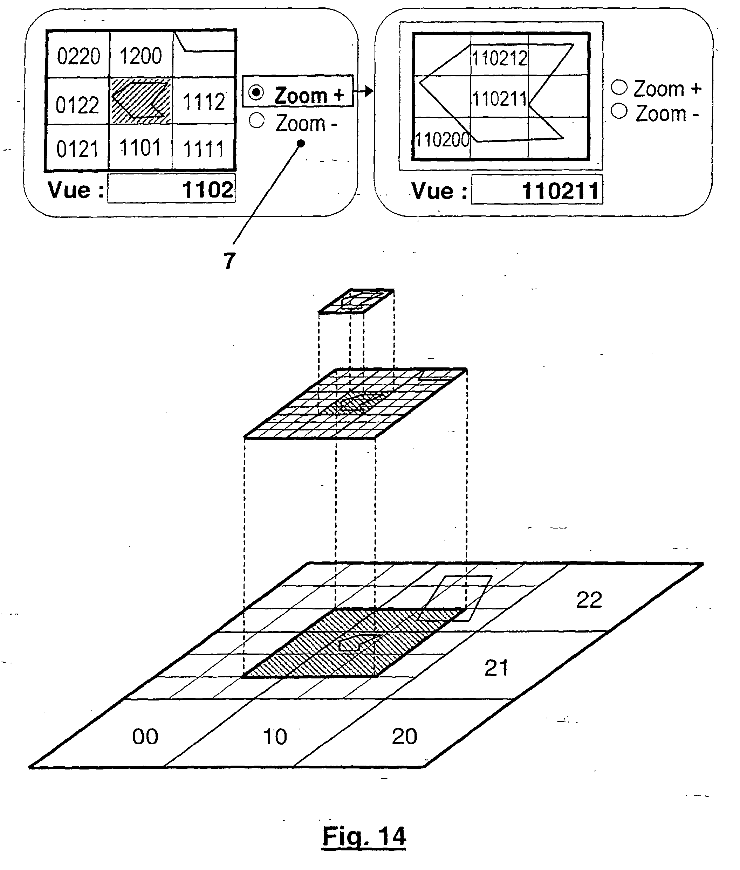

*Cf. **fig. 14** où l'«outil» de transition entre niveaux est figuré par des boutons de zoom + et de zoom -*, *tandis que le passage de la « vue » initiale à la « vue » finale s'observe à travers le cadre d'affichage* Remarque : l'affichage de 5x5 ou de 7x7 mailles ne correspond pas à une transition entre niveaux de visualisation, mais à l'élargissement du champ d' observation d' une « vue » au sein d' un même niveau de visualisation.

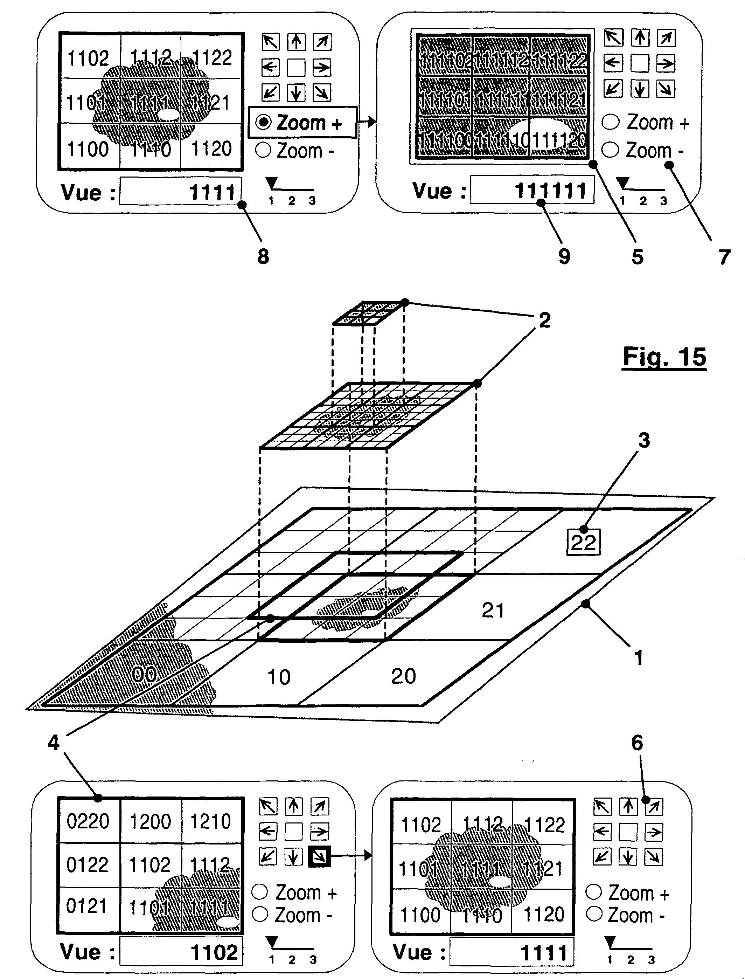

*La **fig. 15** vise à illustrer une mise en application de l'invention :* celle-ci permet d' opérer sur une représentation plane (1) d'objets concrets ou abstraits, ou de phénomènes quelconques enregistrés sous forme numérique matricielle (« raster »), qui est structurée en mailles imbriquées (2) suivant une logique ternaire auxquelles on affecte un système original d'indexation topologique ternaire (3).
La représentation iconographique s' observe principalement sous la forme de « vues » (4) , qui encadrent 9 mailles chacune, dont on fait varier les agencements à l'aide du procédé de navigation, ce qui produit des effets de déplacement au sein du cadre d' affichage (5).
Le procédé de navigation et de visualisation selon l'invention y est appliqué sous la forme d' un « outil » de translations entre «vues» au sein d'un même niveau figuré par 8 touches directionnelles (6) (avec cas d' un recentrage, et curseur de réglage de pas de déplacement (O) fixé sur la valeur 1 ), et d' un « outil » de transitions entre «vues » de niveaux différents, figuré par les zooms grossissant et réduisant (7) (avec cas d' un zoom+ ) ; à partir du numéro d'index d' une « vue » initiale (8), est établi directement, en fonction de l'action appliquée, celui de la « vue » résultante (9) à partir duquel s' effectue le nouvel affichage.

Le procédé de navigation et de visualisation selon l'invention, s' adapte, suivant la même logique, à des «vues» parallélépipédiques dans un espace tridimensionnel, et se traduit par des imbrications variables et des déplacements qui peuvent toujours être rapportés à leurs projections selon les trois plans principaux de référence contenant les axes de coordonnées complètes (abscisse, ordonnée, et hauteur), pris deux à deux, qui sont parallèles aux faces du schéma parallélépipédique d'ensemble.

La mise en oeuvre de l'invention se fait à travers l'exploitation informatique de la représentation iconographique.
On en présente un mode de réalisation, en indiquant comment on peut transposer dans un ordinateur la structuration d' une représentation plane en mailles imbriquées selon la logique ternaire, et comment on peut y mettre en oeuvre les procédés de navigation et de visualisation.
Ceci se fait à l'aide d' un jeu succinct d' algorithmes, en adoptant les conventions suivantes :
- les variables qui ont des valeurs entre " " sont des chaînes (ou tableaux) de caractères
- M [i] représente le caractère de rang i dans la chaîne de caractères M
- le rang du premier caractère dans une chaîne est 0 (selon l'usage en programmation)
- l'opérateur + appliqué à des chaînes de caractères correspond à la concaténation
- les coordonnées ternaires sont traitées comme des chaînes de caractères
- (n)₃ représente la valeur transcrite en base 3, de l'entier n en base 10
- l' opérateur ⊕ appliqué à des coordonnées ternaires correspond à l'addition en base 3.
- l'opérateur Θ appliqué à des coordonnées ternaires correspond à la soustraction en base 3. (ces opérations ternaires qui portent sur des chaînes de caractères s' effectuent à l'aide d' algorithmes classiques non figurés ici)
- l'opérateur * correspond à la multiplication (décimale)
- x représente l'abscisse complète, et y l'ordonnée complète de la maille.

Pour alléger la description, n' ont pas été inclus les algorithmes classiques d' addition et de soustraction en base 3, ceux de conversions d' un nombre décimal en base 3 ou d' un nombre ternaire en base 10, ainsi que celui de la division euclidienne.

De par leur unicité, les numéros d' index se prêtent particulièrement bien à la numérotation de répertoires que l'on agence de façon arborescente en reprenant les niveaux de visualisation, chaque répertoire étant à l'origine de 9 répertoires, et ainsi de suite.

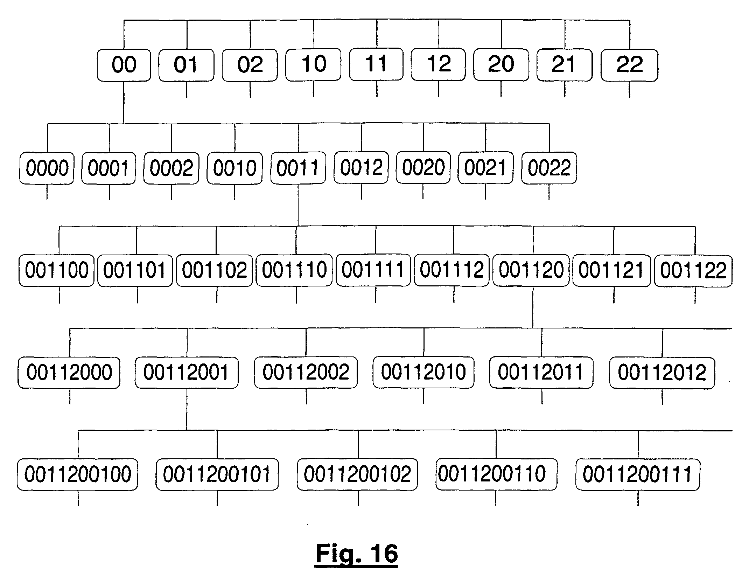

*Cf. **fig. 16** où seul le premier niveau de l'arbre est complètement représenté avec ses 9 répertoires, tandis que la logique en cascade est figurée pour quelques répertoires*
Pour désigner les 9 fichiers correspondant aux 9 mailles à l'intérieur de la maille de niveau antérieur, on adapte la logique de constitution des numéros d'index de celles-ci (par ajouts successifs de paires de chiffres ternaires en suffixe), en concaténant la suite des répertoires (ou chemin d' accès) augmentée d' une des 9 combinaisons ternaires de 00 à 22.
Ainsi la maille de numéro d'index 0121221201 correspond au fichier 0121221201.*** (où *** désigne une extension informatique) qui se trouve sous le répertoire : /racine/01/0121/012122/01212212.

La construction d' une telle arborescence doit être automatisée car le nombre total de mailles croît très vite avec le nombre de niveaux n de l'indexation que l'on s' est fixé : il y en a 7380 pour 4 niveaux, 66.429 pour 5 niveaux.

On désigne par fichier-maille, le fichier correspondant à une maille donnée.

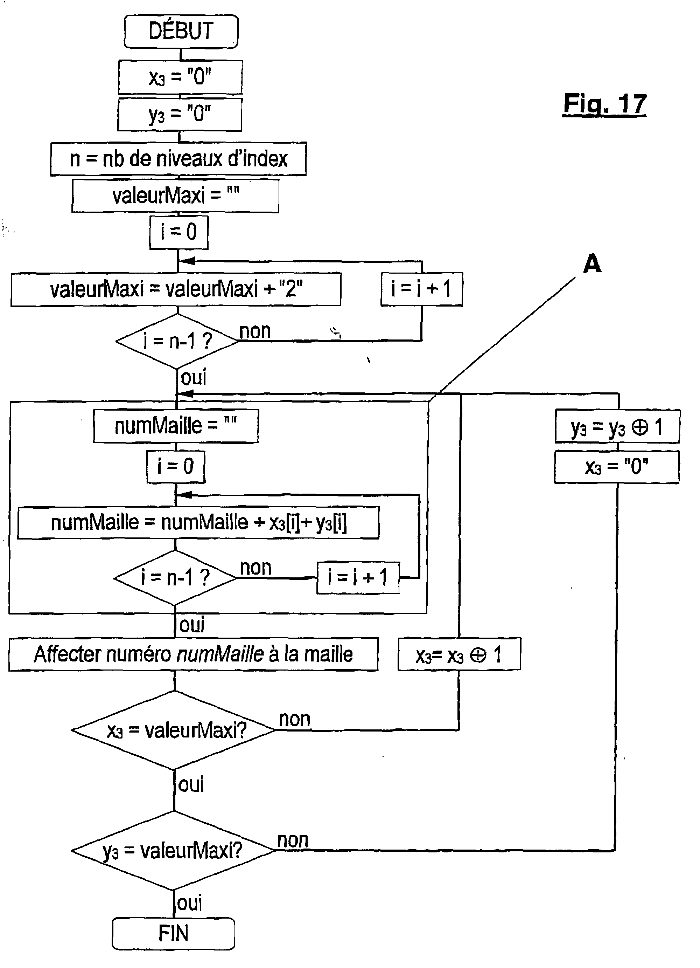

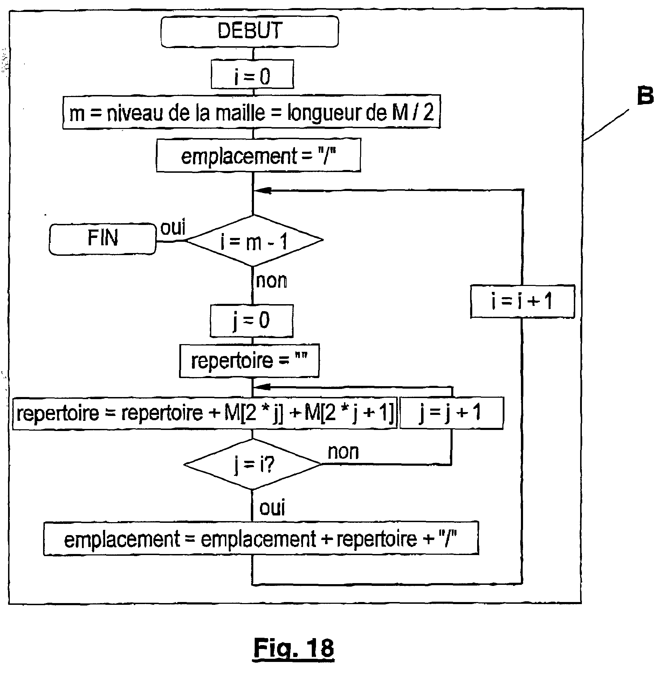

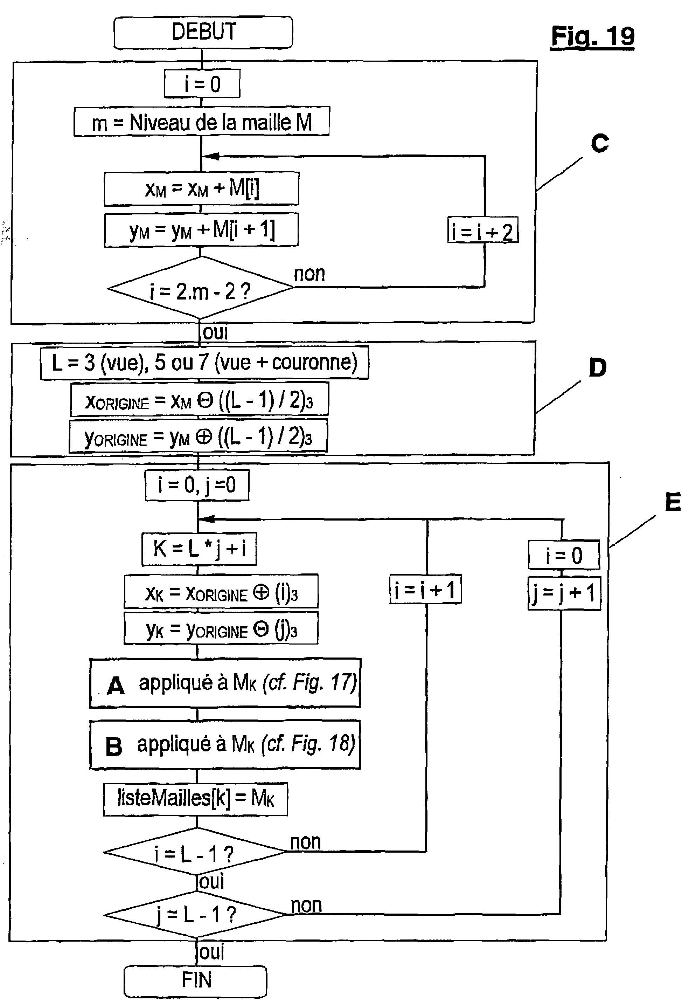

*La **fig. 17** présente un algorithme de numérotation automatique des fichiers-mailles selon l'indexation ternaire* : Dans un premier temps, est calculée la valeur ternaire maximale des abscisses et des ordonnées complètes qui est fonction du nombre de niveaux n de l'indexation, c' est le nombre ternaire composé de la juxtaposition de n fois le chiffre 2 : 22..2
Ensuite la numérotation de chaque fichier-maille se fait séquentiellement à l'aide d'une double boucle en incrémentant de 1 (en base 3) l'abscisse pour parcourir, de niveau en niveau, les mailles selon la ligne correspondant à une ordonnée donnée, qui est à son tour incrémentée de 1 quand l'abscisse atteint la valeur limite 22...2, et ainsi de suite jusqu' à ce que l'ordonnée atteigne à son tour la valeur limite 22...2.Tous les fichiers-mailles de tous les niveaux sont ainsi balayés et affectés chacun d' un numéro d' index qui résulte de la juxtaposition de l'abscisse et de l'ordonnée complètes (sous-programme A encadré), ce qui en détermine l'emplacement dans l'arborescence physique.

*Un deuxième algorithme, cf. **fig. 18,** désigné par B, permet d' établir pour une maille de numéro d' index donné le chemin d'accès caractéristique du fichier qui lui est associé :*
Dans un premier temps est calculé le niveau m de la maille, comme étant égal à la moitié du nombre de chiffres constitutifs du numéro d'index, c' est à dire à la moitié de sa longueur.
Ensuite le chemin d' accès se construit de répertoire en répertoire par concaténation progressive de la paire de chiffres ternaires (traités comme des caractères) relative à chaque niveau.

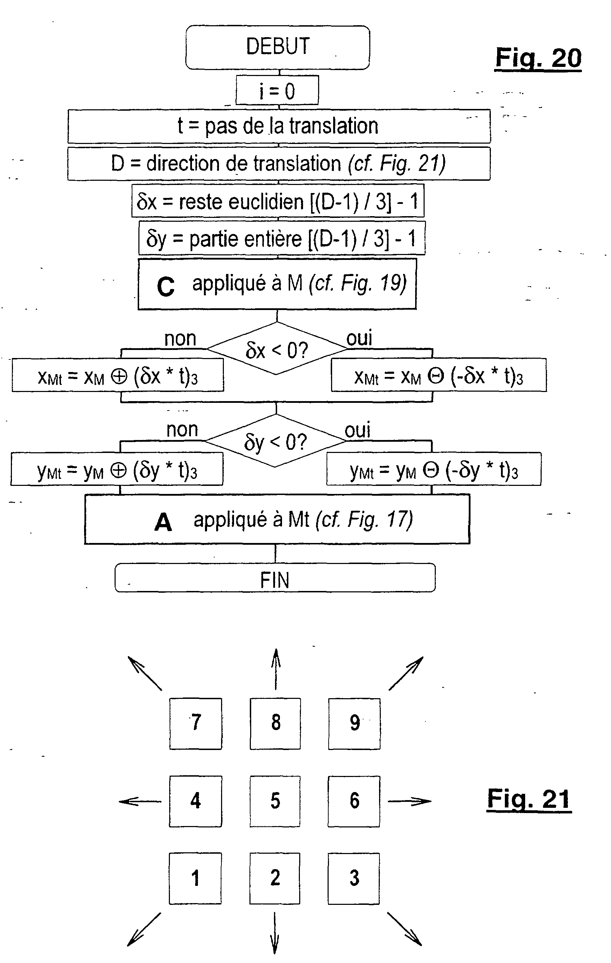

*Un troisième algorithme, de visualisation, cf. **fig. 19**, permet la constitution d'une vue », et de son* extension *éventuelle au moyen d'une ou 2 couronnes de mailles de même niveau qu' elle, à partir d' une maille centrale M :* Dans un premier temps, dans le cadre C, sont déterminées l'abscisse et l' ordonnée ternaires complètes de la maille M à partir de son numéro d'index.
Ensuite, en D, sont déterminées l'abscisse et l' ordonnée complètes de la maille (qualifiée d' origine) qui sera positionnée dans le coin supérieur gauche de la « vue »centrée sur M, ou de son extension au moyen d' une ou 2 couronnes de mailles de même niveau qu' elle (rectangles de 5x5 et 7x7 mailles) ; ceci car les abscisses des différentes mailles vont systématiquement en croissant (addition ternaire) à partir de celle de cette maille en coin, tandis que les ordonnées vont en décroissant (soustraction ternaire).

Enfin, en E, sont calculées tour à tour, par addition ternaire d' une unité en abscisse, et soustraction ternaire d' une unité en ordonnée, les abscisse et ordonnée complètes de chaque maille de la « vue » (ou de ses extensions) à partir de celles de la maille origine. Le numéro d'index de chacune des mailles de la « vue » s' en déduit par entrelacement à l'aide du sous- programme A (*cf. fig. 17),* tandis que l'emplacement du fichier-maille correspondant dans l'arborescence physique s' obtient à l' aide de l'algorithme B (*cf. fig. 18).*

*Un quatrième algorithme, de navigation, cf. **fig. 20**, permet de calculer le numéro d'index d' une maille M*_{*1*} *obtenue par translation d'un nombre entier t de mailles, à partir d'une maille M :*
Dans un premier temps, l'ordinateur doit interpréter le sens de translation souhaité par l' utilisateur : pour l'exemple, les sens de translation sont établis à partir du pavé numérique d' un clavier d' ordinateur, *cf. **fig. 21**.* A partir de la touche centrale (portant le chiffre 5) considérée comme étant sans effet (variations nulles en abscisse et en ordonnée), on peut faire correspondre à chaque touche une variation en abscisse δx de 0,1 ou -1, ainsi qu' une variation en ordonnée δy de 0,1 ou -1, en effectuant la division euclidienne par 3 du chiffre porté par la touche diminué de 1: son reste donne δx augmentée de 1, tandis que sa partie entière donne δy augmentée de 1. (par exemple la division euclidienne de 6 par 3 donne 2 pour partie entière ; en y soustrayant 1, on obtient δy = +1, et 0 pour reste ; en y soustrayant 1, on obtient δx = -1 ( ainsi, la touche 7 = 6 + 1, dans le coin supérieur gauche du pavé correspond bien au sens de translation tel que δx = -1 et δx = +1 avec la convention d' abscisses croissant de gauche à droite, et d' ordonnées croissant de bas en haut ).
Ensuite les abscisse et ordonnée ternaires « complètes » de la maille initiale M sont calculées à l'aide de l'algorithme C (*cf. fig. 19).* On leur applique les variations δx et δy affectées du rapport t suivant le type de translation souhaitée ( t = 1 dans le cas d' un recentrage) et exprimées en base 3 pour calculer les abscisse et ordonnée ternaires complètes de la maille M , résultant de la translation. ( Les « vues » centrées sur M et M , sont constituées avec l'algorithme de visualisation précédent ).

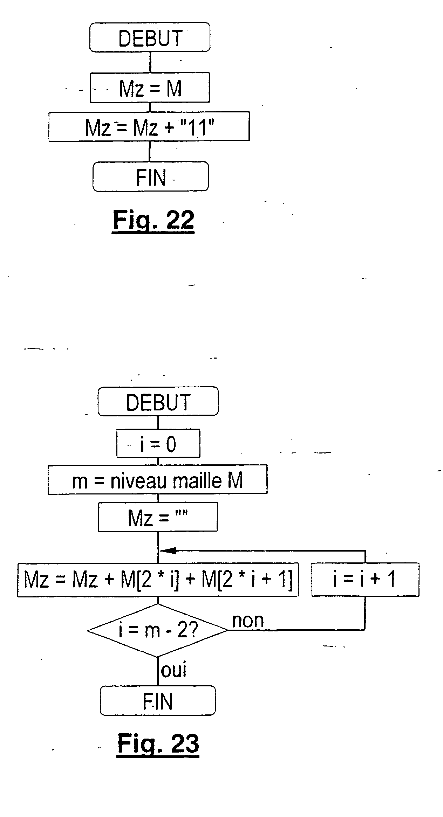

*Les cinquième et sixième algorithmes, de navigation, correspondent à des transitions depuis une maille M de niveau m pour donner une maille M*_{*z*}*.*
Le zoom + centré sur la maille M, *cf. **fig. 22***, s' obtient par concaténation de la chaîne de caractères "11" au numéro d'index de la maille M , qui donne le numéro d'index de la maille M _{z}. Le zoom - , *cf. **fig. 23**,* s' obtient par reconstruction du numéro d'index de la maille M jusqu' au niveau m-1 ( ce qui correspond à la suppression de ses 2 derniers chiffres).

On ne présume pas des langages de programmation dans lesquels peuvent être transcrits les algorithmes qui viennent d' être présentés.

Remarque : relève de la présente invention, tout système d' appellation de fichiers incorporant le principe de numérotation des fichiers dont un mode de réalisation vient d' être présenté.
Par exemple, on peut augmenter les numéros de quelques caractères identifiant chaque thème pour distinguer les fichiers correspondant à différents thèmes iconographiques selon une même emprise spatiale; ainsi, abcdefghijSCANw98 .*** désigne la partie du document scanné w98 qui est située dans la maille de numéro d'index abcdefghij ( *** pourrait caractériser son format avec jpg pour jpeg, etc...), ce qui permet de combiner navigations spatiale et thématique.

La modélisation numérique matricielle (« raster »), c' est à dire sous forme d' ensembles de points, ou de pixels, est très bien adaptée à l'exploration systématique de la représentation iconographique; en effet, elle affranchit l'utilisateur de la lourde nécessité d'interpréter, et de coder le contenu iconographique en entités bien différenciées, alors que ses zones d'intérêt peuvent avoir des contours flous. Cette structuration de l'information est automatiquement produite par un scanner ou un enregistrement photographique, par exemple ; l'affichage d' images à l'écran d'un ordinateur, leur échange en réseau, leur impression, se font aussi sous forme « raster » (« bitmaps »,etc...).

L' invention peut être mise en oeuvre efficacement dans un parc informatique en architecture distribuée :
- un fichier-maille élémentaire peut y être considéré comme une unité de stockage et de transfert réalisant un compromis entre son emprise et la quantité d' octets, ou de pixels, qui lui correspond.
- l'affichage d' une « vue » selon un thème donné, fait rapatrier sur un poste client les seuls fichiers-mailles pertinents depuis un poste serveur. Toute action de navigation et de visualisation (recentrages, translations selon des pas prédéfinis, zooms, et extensions par couronnes) se traduit par de nouveaux transits entre le poste serveur et le poste client.

Le procédé selon l'invention peut opérer sur tout type de représentation iconographique plane, dans laquelle on considère, par exemple, une emprise utile maximum carrée de largeur L. Dans ce cas, le nombre n de niveaux de visualisation, la largeur u de la plus petite maille et L sont liés selon L = u.3ⁿ On peut donc fixer L et n, et en déduire u, ou fixer L et u, et en déduire n, ou encore ajuster L sur les valeurs de n et de u souhaitées. On peut aussi raisonner en échelles de « vues » pour choisir L et u.
Suivant le domaine d' application, u peut prendre des tailles variant dans de très grandes proportions.

De par sa capacité à rationaliser la gestion et l'exploitation des données iconographiques, l'invention, peut servir de clé de voûte à bien des applications d' archivage, de consultation, de transmission et d' édition d'images (dans la plus large acception de ce terme) relatives à des thèmes aussi variés que la diffusion de documents scannés, l'automatisation de la production de plans normalisés, l'organisation en cascades d' organigrammes, l'exploration de l'imagerie tridimensionnelle, etc....

## Revendications

1. Procédé de navigation spatiale pour des représentations iconographiques (1) p. ex. plans, cartes, photographies, images, sous forme numérique matricielle qui consiste à diviser celles-ci en un ou plusieurs niveau(x) de mailles imbriquées selon une logique ternaire récursive (2), et à leur affecter un système d'indexation ternaire, dans lequel le numéro d'index (3) de chaque maille lui sert de coordonnée ternaire unique correspondant à l'entrelacement des chiffres constitutifs de ses coordonnées ternaires complètes: abscisse, ordonnée, et éventuellement hauteur.

2. Procédé de navigation spatiale selon la revendication 1, **caractérisé en ce que** l'on opère des translations d' un nombre entier t de mailles selon côtés ou diagonales, en répercutant des variations de plus ou moins t unités, transcrites en base 3, sur les coordonnées ternaires complètes d' une maille, pour donner celles de la maille de même niveau résultant de la translation, et, après entrelacement, son numéro d'index.

3. Procédé de navigation spatiale selon la revendication 1 ou la revendication 2, **caractérisé en ce que** l'on opère des transitions entre niveaux de mailles par ajout ou suppression de chiffres ternaires, par tranches de deux, ou trois, en cas de représentation tridimensionnelle, en suffixe, ou en préfixe, aux numéros d'index des mailles.

4. Procédé de navigation et de visualisation spatiale selon l'une quelconque des revendications précédentes, **caractérisé en ce que** l'observation se fait principalement sous la forme de « vues » (4), à travers un cadre d' affichage (5), et qu' une « vue » encadre 9 mailles d' un niveau donné, trois selon un côté, trois selon l' autre.

5. Procédé de navigation et de visualisation spatiale selon la revendication 4, **caractérisé en ce que** l'on opère des translations d' un nombre entier t de mailles selon côtés ou diagonales, en répercutant des variations de plus ou moins t unités, transcrites en base 3, sur les coordonnées ternaires complètes de la maille déterminante d' une « vue » pour un niveau donné, afin de donner celles de la maille déterminante de la « vue » de même niveau résultant de la translation, et, après entrelacement, son numéro d'index, le cas du recentrage correspondant à t = 1.

6. Procédé de navigation et de visualisation spatiale selon la revendication 4 ou la revendication 5, **caractérisé en ce que** l'on réalise des effets de zoom sur les « vues », en opérant des transitions entre niveaux de mailles par ajout ou suppression de chiffres ternaires, par tranches de deux, ou trois, en cas de représentation tridimensionnelle, en suffixe, ou en préfixe, aux numéros d' index des mailles qui les déterminent.

7. Procédé de navigation et de visualisation spatiale selon l'une quelconque des revendications 4 à 6, **caractérisé en ce qu'** une « vue » peut être étendue par des couronnes de mailles.

8. Outil de réglage du pas de translation destiné au procédé selon la revendication 2 ou la revendication 5, **caractérisé en ce qu'** il comporte des degrés correspondant à différentes valeurs du nombre t de maille(s) de translation, un tel outil pouvant être constitué d' un curseur à t positions (O).

## Patentansprüche

1. Raumnavigationsverfahren für ikonografische Darstellungen (1), z. B. Pläne, Karten, Fotografien, Bilder, in einem digitalen Rasterformat, das darin besteht, letztere in eine oder mehrere Rasterzellenebenen zu zerlegen, die nach einer rekursiven temären Logik (2) miteinander verschachtelt sind, und darin, ihnen ein ternäres Indexierungssystem zuzuweisen, in dem die Indexnummer (3) jeder Rasterzelle jener als einzelne ternäre Koordinate dient, die der Verzahnung der seinen vollständigen Temärkoordinaten zugrunde liegenden Zahlen entsprechen: Abszisse, Ordinate und eventuell die Höhe.

2. Raumnavigationsverfahren nach Anspruch 1, **dadurch gekennzeichnet, dass** Verschiebungen einer ganzen Zahl t von Rasterzellen entsprechend Seiten oder Diagonalen vorgenommen werden, wobei Abweichungen von mehr oder weniger als t Einheiten weiter gegeben werden, übertragen ins Temärsystem, über die vollständigen Temärkoordinaten einer Rasterzelle, um jene der Rasterzelle der gleichen Ebene bereitzustellen, die sich aus der Verschiebung ergibt und, nach der Verzahnung, seine Indexnummer.

3. Raumnavigationsverfahren nach Anspruch 1 oder nach Anspruch 2, **dadurch gekennzeichnet, dass** Wechsel zwischen Rasterzellenebenen durch Hinzufügen oder Entfernen von Temärzahlen zu den Indexnummem der Rasterzellen vorgenommen werden, in Schichten von zwei, oder drei im Fall einer dreidimensionalen Darstellung, als Suffix oder als Präfix.

4. Raumnavigationsverfahren nach irgendeinem der vorgenannten Ansprüche, **dadurch gekennzeichnet, dass** die Betrachtung hauptsächlich in der Form von "Ansichten" (4) erfolgt, durch einen Anzeigerahmen (5) hindurch, wobei eine "Ansicht" 9 Rasterzellen einer gegebenen Ebene umschließt, drei entsprechend der einen Seite, drei entsprechend der anderen.

5. Raumnavigations- und Anzeigeverfahren nach Anspruch 4, **dadurch gekennzeichnet, dass** Verschiebungen einer ganzen Zahl t von Rasterzellen entsprechend Seiten oder Diagonalen vorgenommen werden, wobei Abweichungen von mehr oder weniger als t Einheiten weiter gegeben werden, übertragen ins Ternärsystem, über die vollständigen Temärkoordinaten der für eine "Ansicht" bestimmenden Rasterzelle einer gegebenen Ebene, um jene der bestimmenden Rasterzelle der gleichen Ebene bereitzustellen, die sich aus der Verschiebung ergibt und, nach der Verzahnung, seine Indexnummer, der Fall der Neuausrichtung entspricht t =1.

6. Raumnavigations- und Anzeigeverfahren nach Anspruch 4 oder nach Anspruch 5, **dadurch gekennzeichnet, dass** Zoom-Effekte auf die "Ansichten" angewendet werden, indem Wechsel zwischen Rasterzellenebenen durch Hinzufügen oder Entfemen von Temärzahlen zu den Indexnummem der sie bestimmenden Rasterzellen vorgenommen werden, in Schichten von zwei, oder drei im Fall einer dreidimensionalen Darstellung, als Suffix oder als Präfix.

7. Raumnavigations- und Anzeigeverfahren nach irgendeinem der Ansprüche 4 bis 6, **dadurch gekennzeichnet, dass** eine "Ansicht" durch Rasterzellenringe erweitert werden kann.

8. Einstellungs-Tool für den Verschiebungsschritt, vorgesehen für das Verfahren des Anspruchs 2 oder des Anspruchs 5, **dadurch gekennzeichnet, dass** es über Graduierungen verfügt, die verschiedenen Werten der Zahl t der Verschiebungszelle(n) entsprechen, wobei ein solches Tool aus einem Cursor an t Positionen (O) bestehen kann.

## Claims

1. A spatial navigation method applied to raster digital images (1), for example plans, maps, photographs, or pictures, said images being subdivided into one or many level(s) of meshes according to a ternary recursive logic (2), with these meshes then being assigned a ternary indexing system, where the indexing number (3) of each mesh acts as a unique ternary coordinate corresponding to the interleaving of the digits of its complete ternary coordinates: absciss, ordinate, and possibly height.

2. The spatial navigation method of claim 1 wherein translations of a t integer number of meshes along sides or diagonals are implemented through variations of more or less t units, written in base 3, on the complete ternary coordinates of a mesh, to give those of the mesh at the same level resulting from the translation and, after interleaving, its indexing number.

3. The spatial navigation method of claim 1 or claim 2, wherein transitions between levels of meshes are implemented by adding or suppressing ternary digits, by groups of 2, or 3 for three-dimensional imagery, as suffixes or prefixes, to the mesh indexing numbers.

4. The spatial navigation and visualisation method of any of the above claims, wherein the viewing is mainly carried out in the forms of "views" (4) through a display frame (5), each of said "views" covering 9 meshes of a given level in a three by three layout.

5. The spatial navigation and visualisation method of claim 4, wherein translations of a t integer number of meshes along sides or diagonals are implemented through variations of more or less t units, written in base 3, on the complete ternary coordinates of the determining mesh for a given "view", in order to give those of the determining mesh for the "view" at the same level resulting from the translation and, after interleaving, of its indexing number, the recentering case corresponding to t = 1.

6. The spatial navigation and visualisation method of claim 4 or claim 5, wherein zoom effects are implemented on the "views" by carrying out transitions between levels of meshes by adding or suppressing ternary digits by groups of 2, or 3 for three-dimensional imagery, as suffixes or prefixes, to the mesh indexing numbers.

7. The spatial navigation and visualisation method of any of the claims 4 to 6, wherein a "view" may be extended by rings of meshes.

8. A translation step adjustment tool intended for use in the method described in claim 2 or in claim 5, said tool bearing degrees corresponding to the different values of the number t of translation mesh(es), and possibly consisting of a cursor with t positions (0).
